# EUROPÄISCHE PATENTSCHRIFT

(11) **EP 3 538 401 B1**
(45) Veröffentlichungstag und Bekanntmachung des Hinweises auf die Patenterteilung: **06.08.2025**
(21) Anmeldenummer: 17781069.4
(22) Anmeldetag: 04.10.2017
(51) Int. Cl.: B60R 21/013, B60R 21/0132

(54) **VERFAHREN ZUR ANSTEUERUNG EINER PERSONEN-SCHUTZVORRICHTUNG**
METHOD FOR ACTUATING A PASSENGER PROTECTION DEVICE
PROCÉDÉ DE COMMANDE D'UN DISPOSITIF DE PROTECTION DES PERSONNES

(30) Priorität: 10.11.2016 DE 102016222082
(43) Veröffentlichungstag der Anmeldung: 18.09.2019
(73) Patentinhaber: Robert Bosch GmbH, 70442 Stuttgart (DE)
(72) Erfinder: KOENIG, Simon, 70839 Stuttgart (DE); SONNTAG, Erich, 71672 Marbach am Neckar (DE); EBRAHIM, Parisa, 70569 Stuttgart (DE); RECKZIEGEL, Bastian, 73230 Kirchheim/Nabern (DE); LANG, Gunther, 70563 Stuttgart (DE)
(86) Internationale Anmeldenummer: PCT/EP2017/075124
(87) Internationale Veröffentlichungsnummer: WO 2018/086799

(56) Entgegenhaltungen:
- EP-A1- 2 868 532
- DE-A1- 10 328 976
- DE-A1- 102010 045 162
- DE-B3- 102006 051 786
- JP-A- H0 891 169
- US-A- 5 418 722
- US-A- 5 668 740
- US-A1- 2002 169 534

## Beschreibung

### Stand der Technik

Die Erfindung betrifft ein Verfahren und eine Recheneinheit zur Ansteuerung einer Personen-Schutzvorrichtung.

In der DE 10 2011 118 149 A1 wird ein Verfahren zum Betreiben eines Sicherheitssystems eines Kraftfahrzeugs offenbart. In diesem Verfahren wird eine momentane Verkehrssituation klassifiziert. Zudem wird eine Wahrscheinlichkeit für ein Eintreten eines Unfalltyps aus einer Mehrzahl an vorbestimmten Unfalltypen in der klassifizierten momentanen Verkehrssituation ermittelt. Falls die ermittelte Wahrscheinlichkeit einen vorbestimmten Schwellwert überschreitet, wird eine Auslöseschwelle für ein Betätigen zumindest einer Insassen-Schutzvorrichtung angepasst.

Mit der vorliegenden Erfindung soll eine Anpassung der Auslöseschwelle in Abhängigkeit von der befahrenen Fahrbahn ermöglicht werden.

### Offenbarung der Erfindung

Die Erfindung beschreibt ein Verfahren zur Ansteuerung einer Personen-Schutzvorrichtung für ein Fahrzeug. Die Personen-Schutzvorrichtung wird hierbei angesteuert, wenn mittels einer Crasherkennungsfunktion ein Crash ermittelt wird, insbesondere in Abhängigkeit wenigstens eines Signals eines Crashsensors. Die Crasherkennungsfunktion wird hierbei in Abhängigkeit von einem Signal einer Umfeldsensorik sensitiviert. Diese Sensitivierung erfolgt zudem in Abhängigkeit von einem Zustand einer von dem Fahrzeug befahrenen Fläche, insbesondere einer Straße (ursprüngliche Seite 6). Zur Ermittlung eines Zustands einer von einem Fahrzeug befahrenen Fläche, insbesondere einer Straße, wird ein dieser Zustand repräsentierenden Zustandswerts ermittelt. Das Fahrzeug weist wenigstens einen Inertialsensor auf. Das Verfahren zeichnet sich dadurch aus, dass der Zustandswert in Abhängigkeit wenigstens eines von dem Inertialsensor erfassten ersten Signals erhöht, wenn das erste Signal einen Signalschwellwert erreicht oder überschreitet und/oder der Zustandswert verringert, wenn das erste Signal den Signalschwellwert unterschreitet. Dabei erfolgt keine Sensitivierung der Crasherkennungsfunktion, wenn ein Zustand einer von dem Fahrzeug befahrenen Fläche, insbesondere einer Straße, als störend für die Crasherkennungsfunktion bewertet wird. Der Zustand einer von dem Fahrzeug befahrenen Fläche wird dann als störend für die Crasherkennungsfunktion bewertet, wenn der Zustandswert einen Zustandsschwellwert überschreitet.

Diese Ausführungsform des Verfahrens bietet den Vorteil, dass der Zustandswert einen realitätsnahen Zustand der von dem Fahrzeug befahrenen Fläche, insbesondere einer Straße, wiedergibt. Um nicht jede kleine Fahrzeugbewegung oder Erschütterung in den Zustandswert einfließen zu lassen, muss das erste Signal zunächst einen Signalschwellwert erreichen, bevor eine Erhöhung des Zustandswerts erfolgt.

Der Signalschwellwert und/oder mehrere Signalschwellwerte können hierbei fahrzeugspezifisch und sensorspezifisch unterschiedlich ausfallen, bzw. unterschiedlich definiert/festgelegt werden. Hierdurch ist es zudem möglich, eine optimale Anpassung des Verfahrens für unterschiedliche Fahrzeuge zu gewährleisten.

Dieses Verfahren kann insbesondere in einem Fahrzeug, welches mit einem entsprechenden Sensor ausgestattet ist, ausgeführt werden. Alternativ kann das Verfahren auch auf einer ausgelagerten Recheneinheit ausgeführt werden, welche beispielsweise in einem oder mehreren Fahrzeugen erfasste Sensorwerte empfängt und auswertet. Die Übertragung kann beispielsweise per Funk oder über das Internet erfolgen. Die über die befahrene Straße gewonnenen Informationen können anschließend mit mehreren Fahrzeugen geteilt werden, beispielsweise über eine entsprechende Kommunikationsschnittstelle, wie eine Cloud. Auf diese Weise erhalten auch Fahrzeuge ohne eine entsprechende integrierte Funktion oder ohne die notwendige Sensorik Informationen über den Zustand einer bestimmten Fläche, bzw. einer bestimmten Straße, bzw. eines bestimmten Straßenabschnittes.

Der Zustandswert kann nach dessen Ermittlung einer oder mehreren weiteren Funktionen zur Verfügung gestellt werden. Die weitere Funktion kann beispielsweise im Fahrzeug implementiert sein und für die Auslösung von Sicherheitsmitteln und/oder einem Personen-Schutzsystem und/oder Rückhaltemitteln ausgelegt sein. Es ist auch denkbar, dass die Funktion für eine Ansteuerung eines Fahrwerks, wie beispielsweise eines Dämpfers oder einer Luftfederung, vorgesehen ist.

Unter dem Zustand einer Fläche, insbesondere einer Straße, kann beispielsweise verstanden werden, ob die Fläche einen guten oder schlechten Untergrund aufweist. Beispielsweise, ob auf der Fläche viele Schlaglöcher vorhanden sind, viel Geröll oder Steine herumliegen oder die Fläche eine sehr glatte Oberfläche aufweist. Wichtig ist hierbei insbesondere die Auswirkung des Zustands der Fläche und/oder der Straße auf eine Inertialsensorik und/oder Crashsensoren in einem Fahrzeug.

Unter einem Inertialsensor können beispielsweise Drehratensensoren oder Beschleunigungssensoren verstanden werden. Als Crashsensoren können zu diesen Sensortypen zusätzlich Drucksensoren zum Einsatz kommen. Unter dem von wenigstens einem Inertialsensor erfassten ersten Signal kann folglich ein eine Drehrate repräsentierendes und/oder einen Beschleunigungswert repräsentierendes Signal verstanden werden.

Dieses Verfahren bietet den Vorteil, dass eine Bestimmung des Zustands der von einem Fahrzeug befahrenen Fläche sehr einfach und kostengünstig ermittelt werden kann. Zudem basiert die Bestimmung auf Sensormesswerten, welche auch für eine Crasherkennung eingesetzt werden können. Folglich ergeben sich bei einer Bereitstellung der gewonnenen Informationen Synergieeffekte, welche wiederum zu einer Erhöhung der Sicherheit von Verkehrsteilnehmern beitragen.

In einer weiteren Ausführungsform des Verfahrens wird der Zustandswert um einen vordefinierten Strafwert erhöht, wenn das erste Signal einen Signalschwellwert überschreitet.

Diese Ausführungsform bietet den Vorteil, dass starke Unebenheiten höher gewichtet werden, und folglich die Wahrscheinlichkeit einer Fehlinterpretation von Crashsignalen reduziert wird. Zudem fließt durch das erhöhen des Zustandswerts um ein Strafwert beim Überschreiten des Signalschwellwerts die Anzahl von Beschleunigungspeaks in den Zustandswert ein und folglich die Frequenz von Erschütterungen. Dies ist ebenfalls ein wichtiges Maß zur Bestimmung eines Zustands einer von dem Fahrzeug befahrenen Fläche.

Unter einem Überschreiten des Signalschwellwerts wird hierbei verstanden, dass das Signal zuvor unterhalb des Signalschwellwerts und nach dem Überschreiten oberhalb des Signalschwellwerts liegt.

In einer weiteren Ausführungsform des Verfahrens erfolgt eine Erhöhung des Strafwerts in Abhängigkeit einer ermittelten und/oder erfassten Amplitude des ersten Signals.

Diese Ausführungsform Verfahrens bietet den Vorteil, dass bei der Ermittlung des Zustandswerts einer Fläche unterschiedlich stark ausgeprägte Unebenheiten auch unterschiedlich stark gewichtet werden. Hierdurch ist es möglich, mittels des Zustandswerts ein exaktes Maß für den tatsächlichen Zustand der Fläche zu erhalten. Der Strafwert kann in dieser Ausführungsform etwas versetzt zum Zeitpunkt des Überschreitens zum Zustandswert hinzugefügt werden, sodass zunächst die Peakamplitude bestimmt werden kann. Alternativ oder zusätzlich kann die Peakamplitude auch einen oder mehrere folgende Strafwerte beeinflussen.

Einer weiteren Ausführungsform des Verfahrens wird der Zustandswert kontinuierlich erhöht, solange das erste Signal einen Signalschwellwert überschreitet, wobei der Zustandswert insbesondere linear erhöht wird.

Der Zustandswert wird hierbei kontinuierlich erhöht, solange das erste Signal über einem Signalschwellwert liegt, anders als der zuvor erwähnte Strafwert, um welchen der Zustandswert nur einmalig bei einem Überschreiten eines Signalschwellwerts erhöht wird.

Diese Ausführungsform bietet den Vorteil, dass die Zeitspanne, in welcher das erste Signal den Signalschwellwert überschreitet, bei der Ermittlung des Zustandswerts mit berücksichtigt wird, bzw. in diesen einfließt. Diese Zeitspanne ist ebenfalls ein Maß für den Zustand einer befahrenen Fläche. Insbesondere fallen somit längere Fahrten auf sehr holprigen Untergrund bei einer Ermittlung des Zustandswerts stärker ins Gewicht.

In einer weiteren Ausführungsform des Verfahrens wird der Zustandswert kontinuierlich verringert, solange das erste Signal einen Signalschwellwert unterschreitet. Der Zustandswert wird hierbei insbesondere linear verringert.

Diese Ausführungsform bietet den Vorteil, dass der Zustandswert sich bei guten Verhältnissen der Fläche, insbesondere der Straße, wieder verringern kann. Hierdurch wird wiederum die Qualität des Zustandswerts verbessert. Einmalig oder selten auftretende Ereignisse, wie das überfahren eines Bürgersteigs, fallen somit nicht zu stark ins Gewicht, wodurch Fehlinterpretationen des Zustands der befahrenen Fläche vermieden werden können.

In einer weiteren Ausführungsform des Verfahrens erfolgt eine zeitliche Erhöhung des Zustandswerts. Die Stärke der Erhöhung, also wie schnell der Zustandswert pro Zeiteinheit ansteigt, ist hierbei abhängig von einer ermittelten und/oder erfassten Amplitude des ersten Signals.

Diese Ausführungsform ermöglicht es, stärkere Unebenheiten über einen längeren Zeitraum in den Zustandswert einfließen zu lassen und sie folglich höher zu gewichten. Hierdurch wird eine weitere Möglichkeit geboten, Parameter derart einzustellen, dass der letztlich ermittelte Zustandswert ein möglichst genaues Maß für den tatsächlichen Zustand der Fläche darstellt.

In einer weiteren Ausführungsform des Verfahrens erhöht sich der Zustandswert beim Überschreiten des ersten Signals von dem Signalschwellwert pro Zeitintervall stärker, als er sich in dem gleichen Zeitintervall beim Unterschreiten des ersten Signals von dem Zeitschwellwert verringert.

In dieser Ausführungsform sind nicht einmalige Erhöhungen oder Verringerungen des Zustandswerts gemeint, sondern zeitlich kontinuierliche Erhöhungen bzw. Verringerungen des Zustandswerts. Diese Ausführungsform ermöglicht es wiederum, mittels des Zustandswerts eine optimale Darstellung des tatsächlichen Flächen- bzw. Straßenzustands zu ermöglichen. Diese Ausführungsform kann ergänzend oder alternativ zur Erhöhung des Zustandswerts um einen Strafwert beim Überschreiten eines Signalschwellwerts eingesetzt werden. Wird kein Strafwert aufaddiert, lässt sich mit dem schnelleren Anstieg des Zustandswerts beim Überschreiten des ersten Signals vom Signalschwellwert sicherstellen, dass Zeiten, in welchen große Erschütterung gemessen werden stärker gewichtet werden, als Zeiten ohne Erschütterung, bzw. Zeiten während denen das erste Signal den Signalschwellwert unterschreitet.

Unter einer Personen -Schutzvorrichtung kann eine beliebige Vorrichtung verstanden werden, welche dazu eingerichtet ist eine an einem Unfall beteiligte Person zu schützen. Hierunter fallen beispielsweise Airbags für Fahrzeuginsassen, Gurtstraffer, Airbags für Personen außerhalb des Fahrzeugs und beispielsweise weitere Sicherheitseinrichtungen, wie Mechanismen zum Anheben einer Motorhaube zum Schutz von Fußgängern.

Unter einer Crasherkennungsfunktion wird eine Funktion verstanden, welche insbesondere in Abhängigkeit von wenigstens einem Signal eines Crashsensors ermittelt, ob ein Crash vorliegt. Entsprechende Crasherkennungsfunktionen sind aus dem Stand der Technik bekannt.

Unter einer Sensitivierung der Crasherkennungsfunktion wird verstanden, dass ein Crash schneller bzw. zeitlich früher erkannt wird, bzw. ein entsprechendes Signal von der Crasherkennungsfunktion ausgegeben wird. Hierfür kann beispielsweise ein Crashschwellwert herabgesetzt verstanden werden. Es kann auch eine veränderte Bearbeitung eines von einem Crashsensor erfassten Signals unter einer Sensitivierung verstanden werden. Durch die Bearbeitung des wenigstens einen Signals eines Crashsensors kann eine Personen-Schutzvorrichtung bei gleichen Randbedingungen (beispielsweise auf das Fahrzeug wirkende Beschleunigungen, Kräfte, etc.) früher ausgelöst werden als ohne die Bearbeitung. Es kann sich beispielsweise ein Multiplikationsfaktor oder ein zu dem Signal addierter oder subtrahierter Wert verändern. Ein vergleichbares Ergebnis lässt sich auch bei einem herabsetzen eines Crashschwellwerts erreichen.

Der Zustand einer von dem Fahrzeug befahrenen Fläche, insbesondere einer Straße, kann hierbei auf unterschiedlichste Weise empfangen und/oder ermittelt werden. Entweder kann eine Ermittlung im Fahrzeug stattfinden oder es können Daten empfangen werden, die Informationen über einen Zustand der von dem Fahrzeug befahrenen Fläche enthalten. Diese können beispielsweise mittels des oben beschriebenen Verfahrens ermittelt worden sein. Es können auch Zustände von Flächen, insbesondere Straßen, auf einer digitalen Karte abgelegt sein, welche in diesem Verfahren abgerufen werden können. Alternativ können auch Informationen bezüglich des Straßenzustands von anderen Fahrzeugen oder einer zentralen Stelle empfangen werden. Beispielsweise könnten mehrere Fahrzeuge Informationen über den Straßenzustand an eine Cloud senden, welche diese anschließend für weitere Fahrzeuge zur Verfügung stellt. Es kann auch eine Auswertung und Aufbereitung der Daten in der Cloud stattfinden. Hierfür ist es beispielweise ausreichend, wenn nur die Sensordaten der Fahrzeuge an die Cloud oder einen externen Server übertragen werden. Ein sprechendes Verfahren zur Ermittlung eines den Zustand der befahrenen Fläche repräsentierenden Zustandswerts könnte entsprechend auf der Cloud bzw. dem externen Server durchgeführt werden.

Das hier vorgestellte Verfahren bietet den Vorteil, dass Fehlinterpretationen von Crashsignalen, wie beispielsweise Fehlauslösungen von Personen-Schutzvorrichtungen, reduziert werden können, insbesondere wenn sich die Fahrzeuge auf Flächen bzw. Straßen befinden, deren Zustand negative Auswirkungen auf eine Crashsensierung haben. Dies trifft insbesondere bei holprigen Straßen mit Schlaglöchern und/oder Steinen zu.

In einer weiteren Ausführungsform des Verfahrens wird ein Crash ermittelt, wenn ein, anhand von wenigstens einem von einem Crashsensor erfassten Signal, ermitteltes Crashsignal einen Crashschwellwert überschreitet.

Generell können die Vorzeichen bei einer Ermittlung von Signalen verändert werden, sodass aus einem Überschreiten ein Unterschreiten wird. Derartige Veränderungen des Verfahrens stellen selbstverständlich mögliche Alternativen dar, die auch in den Schutzbereich dieser Anmeldung fallen sollen.

In einer vorteilhaften Ausführungsform der Erfindung wird die Crasherkennungsfunktion sensitiviert, indem der Crashschwellwert angepasst wird, insbesondere herabgesetzt wird.

Diese Ausführungsform der Erfindung bietet den Vorteil, dass eine Entscheidung, ob eine Personen-Schutzvorrichtung ausgelöst werden soll, früher getroffen werden kann. Folglich ist es möglich, schneller auf eine bevorstehende Kollision zu reagieren und folglich eine optimierte Auslösung von Personen-Schutzvorrichtung zu gewährleisten. Hierdurch wird die Sicherheit aller Verkehrsteilnehmer erhöht.

In einer weiteren Ausführungsform des Verfahrens wird die Crasherkennung in Abhängigkeit wenigstens eines Umfeldsignals sensitiviert, wenn anhand des wenigstens einen Umfeldsignals eine bevorstehende Kollision erkannt wird.

Beispielsweise kann eine bevorstehende Kollision erkannt werden, indem eine Kollisionswahrscheinlichkeit anhand des wenigstens einen Umfeldsignals ermittelt wird. Hierfür können ggf. Größen einfließen, die mittels einer Auswertung des Umfeldsignals gewonnen werden können. Beispielsweise die Fahrtrichtung eines Crashobjektes, beispielsweise eines weiteren Fahrzeugs, die eigene Fahrtrichtung, die Geschwindigkeit verschiedener Objekte, Maße von Objekten, etc.. Unter Objekten können alle mittels der Umfeldsensorik erfassbaren Gegenstände und/oder mögliche Kollisionsobjekte verstanden werden. Zu diesen Informationen können auch weitere Informationen über das Ego-Fahrzeug einfließen, wie beispielsweise die Geschwindigkeit, der Lenkwinkel oder weitere Auswertungen von weiteren Steuereinheiten. Beispielsweise könnte eine Information verwendet werden, wie hoch der aktuelle Brems- oder Lenkdruck ist und wie schnell ein Fahrmanöver ausführbar ist. Durch eine Kombination aller Informationen kann folglich ermittelt werden, ob eine Kollision bevorsteht oder mit welcher Wahrscheinlichkeit diese bevorsteht. Es kann beispielsweise ein Wahrscheinlichkeitsschwellwert definiert werden, bei dessen Überschreitung davon ausgegangen wird, dass eine Kollision bevorsteht. Beim Überschreiten dieses Schwellwerts wird folglich eine Kollision erkannt.

In einer vorteilhaften Ausführungsform der Erfindung wird der Zustand einer von dem Fahrzeug befahrenen Fläche, insbesondere einer Straße, mithilfe des oben beschriebenen Verfahrens zur Ermittlung eines einen Zustand einer von einem Fahrzeug befahrenen Fläche, insbesondere einer Straße, repräsentierenden Zustandswerts, ermittelt.

Anstelle den Zustand einer von dem Fahrzeug befahrenen Fläche anhand des Zustandswerts zu bewerten, kommen auch andere Methoden in Betracht. Beispielsweise können Informationen über den Zustand einer Straße von einer digitalen Karte gewonnen werden. Alternativ können diese Information beispielsweise auch von einer Cloud abgerufen werden. Bei diesen alternativen Möglichkeiten der Erfassung eines Straßenzustands muss nicht zwingend ein Zustandswert erfasst und/oder ausgewertet werden. Die Informationen können in beliebiger Art und Weise übertragen werden, beispielsweise mittels einer null für einen "guten" und einer eins für einen "schlechten" Straßenzustand.

Diese Ausführungsform bietet den Vorteil, dass Fehlinterpretationen von Crashsignalen reduziert werden können, insbesondere wenn sich das Fahrzeug auf Flächen bzw. Straßen befindet, welche in einem schlechten Zustand sind.

In den Fällen, in denen der Zustandsschwellwert nicht überschritten wird, kann eine Sensitivierung stattfinden. Für die Sensitivierung kann bspw. ein Crashschwellwert herabgesetzt werden. Es können auch mehrere Zustandsschwellwerte festgelegt werden, bei deren Unter- oder Überschreiten definierte Sensitivierungen vorgenommen werden, bspw. gestufte Anpassungen des Crashschwellwerts oder mehrerer Crashschwellwerte.

In einer weiteren Ausführungsform des Verfahrens wird der Crashschwellwert erhöht, wenn ein Zustand einer von dem Fahrzeug befahrenen Fläche, insbesondere einer Straße, als störend für die Crasherkennungsfunktion bewertet wird. Der Zustand einer von dem Fahrzeug befahrenen Fläche wird hierbei insbesondere dann als störend bewertet, wenn der Zustandswert einen Zustandsschwellwert überschreitet.

Diese Ausführungsform des Verfahrens bietet den Vorteil, dass Fehlinterpretationen von Crashsignalen reduziert werden können. Befindet sich ein Fahrzeug beispielsweise auf einer sehr holprigen Straße kann es in ungünstigen Fällen vorkommen, dass eine Situation von einer Crasherkennungsfunktion missinterpretiert wird, da ein Crashschwellwert aufgrund der hohen Erschütterung überschritten wird. Durch eine Erhöhung des Crashschwellwerts bei dem Erkennen einer von dem Fahrzeug zu befahrenden Fläche in einem schlechten, bzw. für die Crasherkennungsfunktion störenden Zustand, können derartige Fälle vermieden werden. Hierdurch kann die Sicherheit aller Verkehrsteilnehmer weiter erhöht werden. Weitere Vorteile ergeben sich in der Verwendung eines auf einem maschinenlesbaren Speichermediums gespeicherten Computerprogramms, das eine Recheneinheit dazu veranlasst, ein Verfahren gemäß der vorstehenden Ausführungen durchzuführen, wenn es auf der Recheneinheit ausgeführt wird.

Eine weitere vorteilhafte Ausführungsform der Erfindung manifestiert sich in der Recheneinheit, insbesondere in einem Regler für eine elektrische Maschine, die durch das auf der Recheneinheit, insbesondere auf einem Speichermedium der Recheneinheit, bereitgestellte Computerprogramm und/oder durch eine entsprechende integrierte Schaltung dazu eingerichtet ist, wenigstens ein Verfahren gemäß der vorstehenden Ausführungen durchzuführen. Hierdurch ergeben sich Synergien, da die Recheneinheit, insbesondere der Regler, nicht nur zur Regelung der elektrischen Maschine dient, sondern auch zur Durchführung des erfindungsgemäßen Verfahrens eingerichtet ist. Die Recheneinheit kann beispielsweise dafür ausgelegt sein, in Abhängigkeit der angepassten Crasherkennungsfunktion einen Airbag oder eine andere Personen-Schutzvorrichtung anzusteuern.

### Zeichnungen

Figur 1 zeigt einen schematischen Verfahrensablauf.
Figur 2 zeigt eine beispielhafte Bestimmung des Zustandswerts.
Figur 3 zeigt ein Verfahrensdiagramm.
Figur 4 zeigt ein Verfahrensdiagramm zur Auslösung einer Personen-Schutzvorrichtung.
Figur 5 zeigt ein weiteres Verfahrensdiagramm.

### Ausführungsbeispiel

Für eine sichere Erkennung von Unfällen können zusätzlich zu in einem Fahrzeug verbauten Crashsensoren auch in dem Fahrzeug verbaute Umfeldsensoren eingesetzt werden. Für eine bestmögliche Zuverlässigkeit der Crashbestimmung können beide Informationen gemeinsam verwertet werden. Wird beispielsweise nach einer Auswertung von Signalen von Umfeldsensoren festgestellt, dass eine Kollision mit einem Objekt bevorstehen könnte, kann eine Crasherkennungsfunktion, welche anhand einer Auswertung der Signale von Crashsensors stattfindet, sensitiviert werden. Das bedeutet, dass im Falle des Eintretens eines tatsächlichen Crashs, eine schnellere Auslösung von Rückhaltemitteln oder Personen-Schutzvorrichtungen möglich ist. Befindet sich das Fahrzeug allerdings in einem schlechten Terrain, beispielsweise auf einer sehr holprigen Straße, kann eine Crashsensitivierung negative Auswirkungen haben. Dieses Problem wird durch die vorliegende Erfindung und die folgenden Ausführungsbeispiele gelöst.

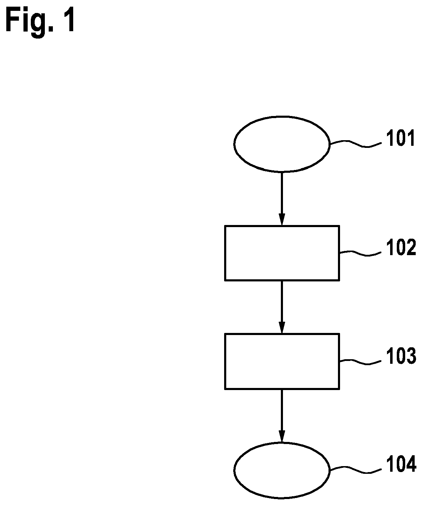

In Figur 1 wird ein Verfahren zur Ermittlung eines einen Zustand einer von einem Fahrzeug befahrenen Fläche repräsentierenden Zustandswerts dargestellt. Die Ermittlung des Zustandswerts kann für alle denkbaren Flächen erfolgen, auf welchen ein Fahrzeug fahren kann. Beispielsweise Straßen, Feldwege, Parkplätze, Wüsten, Strände und/oder Eisflächen. Das Fahrzeug weist hierfür wenigstens einen Inertialsensor auf, in diesem Beispiel einen Beschleunigungssensor. Zudem umfasst das Fahrzeug eine Recheneinheit, welche Signale des Beschleunigungssensors empfangen kann und auf welcher das im Folgenden beschriebene Verfahren ausgeführt werden kann. Das Verfahren startet in Schritt 101.

Im Schritt 102 wird von dem Inertialsensor bzw. dem Beschleunigungssensor ein erstes Signal erfasst, welches in diesem Ausführungsbeispiel einem Beschleunigungssignal entspricht.

In Schritt 103 wird anhand des erfassten Beschleunigungssignals der den Zustand einer von dem Fahrzeug befahrenen Fläche repräsentierende Zustandswert ermittelt. Dies erfolgt in diesem Beispiel auf der Recheneinheit, welche die mittels des Beschleunigungssensors erfassten Beschleunigungssignale empfangen und auswerten kann. In Abhängigkeit des von dem Beschleunigungssensor erfassten ersten Signals wird hierbei der Zustandswert erhöht oder verringert.

Das Verfahren endet in Schritt 104. Für eine kontinuierliche Überwachung bzw. Ermittlung einer von dem Fahrzeug befahrenen Fläche ist es sinnvoll, auch das Verfahren kontinuierlich durchzuführen. Deshalb wird der in Figur 1 dargestellte Vorgang kontinuierlich als Schleife ausgeführt, sodass das Verfahren nach Erreichen des Schritts 104 wieder beim Schritt 101 startet. Auf diese Weise verändert sich der Zustandswert kontinuierlich in Abhängigkeit des Zustands der befahrenen Fläche.

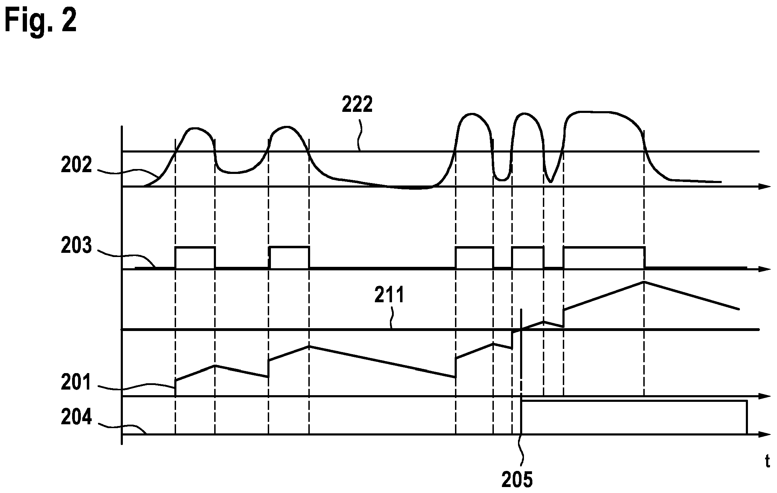

In Figur 2 wird detailliert dargestellt, wie eine mögliche Berechnung des Zustandswerts 201 erfolgen kann. Es wird der Verlauf verschiedener Größen über die Zeit t dargestellt. Diese Größen sind der Zustandswert 201, das erste Signal 202, welches in diesem Ausführungsbeispiel einem Beschleunigungssignal 202 entspricht, eine Eventgröße 203 und eine Misusegröße 204. Die Eventgröße 203 wird immer dann auf eins gesetzt, wenn das Beschleunigungssignal 202 einen vordefinierten Signalschwellwert 222 überschreitet. Ansonsten ist die Eventgröße 203 gleich null. Die Misusegröße 204 bleibt auf null gesetzt, solange die Zustandswert 201 einen Zustandsschwellwert 211 nicht überschreitet. Überschreitet der Zustandswert 201 den Zustandsschwellwert 211, so wird die Misusegröße 204 auf eins gesetzt. Diese Misusegröße 204 kann beispielsweise dafür verwendet werden, um einer weiteren Funktion einen Straßenzustand mitzuteilen. Ist die Misusegröße 204 gleich null, kann von einem Straßenzustand ausgegangen werden, der keinen störenden Einfluss auf beispielsweise Messwerte von in einem Fahrzeug verbauten Beschleunigungssensoren hat. Ist die Misusegröße 204 gleich eins, kann im Gegensatz dazu davon ausgegangen werden, dass ein Straßenzustand vorliegt, welcher sich negativ auf weitere Messwerte bzw. Auswerteverfahren, wie einer Crashkennung, auswirken könnte.

Im Folgenden wird näher erläutert, wie sich der Zustandswert 201 in Abhängigkeit des ersten Signals bzw. Beschleunigungssignals 202 verändert. Überschreitet das Beschleunigungssignal 202 den Signalschwellwert 222 erhöht sich der Zustandswert 201 um einen vordefinierten Strafwert. In diesem Beispiel ist der Strafwert fest vorgegeben und entspricht der Höhe des Zustandswerts 201, unmittelbar nach dem ersten Überschreiten des Beschleunigungswerts 202 von dem Signalschwellwert 222. Der Zustandswert 201 wird immer dann um den Strafwert erhöht, wenn das Beschleunigungssignal 202 den Signalschwellwert 222 von unten überschreitet. Hiermit ist gemeint, dass das Beschleunigungssignal 202 zunächst kleiner als der Signalschwellwert 222 ist und anschließend gleich oder größer als der Signalschwellwert 222 ist.

Solange das Beschleunigungssignal 202 den Signalschwellwert 222 überschreitet, ist die Eventgröße 202 auf eins gesetzt. Während dieser Zeit steigt der Zustandswert 201 mit einer fest vorgegebenen Steigung linear an.

Wird der Signalschwellwert 222 vom Beschleunigungssignal 202 wieder unterschritten, wird die Eventgröße 203 wieder auf null gesetzt. In diesen Zeiträumen verringert sich der Zustandswert 201. In diesem Ausführungsbeispiel findet die Verringerung linear und mit der gleichen aber im Vorzeichen gedrehten Steigung statt, wie bei der Erhöhung des Zustandswerts 201 beim Überschreiten des Beschleunigungssignals 202 vom Signalschwellwert 222. Erreicht der Zustandswert 201 den Wert null, verringert er sich nicht weiter, sondern bleibt bei null, bis das Beschleunigungssignal 202 wieder den Signalschwellwert 222 überschreitet.

Die Misusegröße 204 wird genau dann auf eins gesetzt, wenn der Zustandswert 201 einen Zustandsschwellwert 211 überschreitet. In diesem Ausführungsbeispiel wird der Zeitpunkt nach einer gewissen Zeit t₀ 205 erreicht. Die Misusegröße 204 bleibt so lange auf eins gesetzt, bis der Zustandswert 201 den Zustandsschwellwert 211 wieder unterschreitet.

In einer alternativen Ausführungsform ist vorgesehen, dass die Misusegröße 204, nachdem sie auf eins gesetzt wurde, also nachdem der Zustandswert 201 den Zustandsschwellwert 211 überschritten hat, für einen gewissen, vordefinierten Zeitraum, auf eins gesetzt bleibt. Die Misusegröße 204 bleibt in diesem Zeitraum auch dann auf eins gesetzt, wenn der Zustandswert 201 den Zustandsschwellwert 211 wieder unterschritten hat. Der Zeitraum kann beispielsweise auf mehrere Minuten gesetzt werden. In diesem Ausführungsbeispiel wird er auf 10 Minuten gesetzt. Durch diese Ausführungsform kann sichergestellt werden, dass auch Fahrten auf Straßen, deren Zustand sich häufig ändert, eine zuverlässige Bestimmung des Straßenzustands möglich ist.

In einer alternativen Ausführungsform des Verfahrens unterscheiden sich die Steigungen des Zustandswerts beim Überschreiten bzw. Unterschreiten des Beschleunigungssignals 202 vom Signalschwellwert 222. Das bedeutet, dass sich der Zustandswert 201, beispielsweise beim Überschreiten des Beschleunigungssignals 202 vom Signalschwellwert 222, pro Zeitintervall stärker erhöht, als er sich in dem gleichen Zeitintervall beim Unterschreiten des Beschleunigungssignals 202 vom Signalschwellwert 222 verringert. In diesem Ausführungsbeispiel wird der Zustandswert beim Überschreiten des ersten Signals vom Signalschwellwert nicht um einen Strafwert erhöht.

In einer weiteren Ausführungsform steigt der Zustandswert 201 beim Überschreiten des Beschleunigungssignals 202 vom Signalschwellwert 222 nichtlinear an, sondern exponentiell. Je länger das Beschleunigungssignal 202 in diesem Fall den Signalschwellwert 222 überschreitet, desto schneller erhöht sich der Zustandswert 201 pro Zeiteinheit. Für eine Verringerung des Zustandswerts 201 beim Unterschreiten des Beschleunigungssignals 202 vom Signalschwellwert 222 kann ebenfalls ein nichtlinearer Verlauf vorgesehen sein. In diesem Ausführungsbeispiel fällt der Zustandswert allerdings ebenfalls linear ab.

In einer weiteren Ausführungsform wird zudem die Amplitude des Beschleunigungssignals 202 ausgewertet und fließt in die Höhe des Strafwerts und das Maß der Erhöhung des Zustandswerts 201 ein. Je höher beispielsweise eine Amplitude des Beschleunigungssignals 202 ist, desto größer kann die Steigung gewählt werden, mit welcher der Zustandswert 201 pro Zeiteinheit erhöht wird, solange das Beschleunigungssignal 202 dem Signalschwellwert 222 überschreitet.

In einer alternativen Ausführungsform des Verfahrens findet beim Überschreiten des Beschleunigungssignals 202 vom Signalschwellwert 222 keine Erhöhung des Zustandswerts 201 um einen Strafwert statt. Stattdessen findet eine Erhöhung nur in den Zeiträumen statt, in welchen die Eventgröße 203 auf eins gesetzt ist, das Beschleunigungssignal 202 folglich den Signalschwellwert 222 überschreitet.

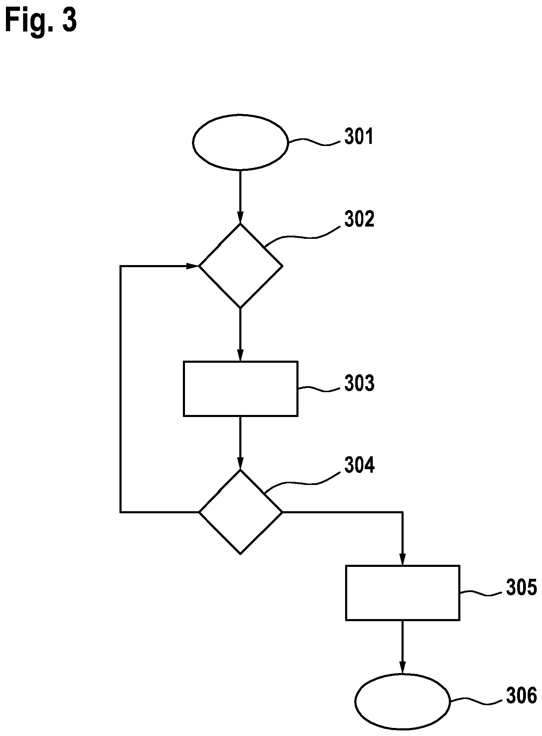

In Figur 3 ist ein weiterer schematischer Verfahrensablauf dargestellt. Dieser startet in Schritt 301. Die Schritte 302 und 303 entsprechen hierbei den Schritten 102 bzw. 103.

In Schritt 302 wird folglich ein Signal eines Initialsensors erfasst. In Schritt 303 wird anhand dieses Signals ein Zustandswert 201 erhöht oder verringert. Diese Erhöhung bzw. Verringerung des Zustandswerts 201 erfolgt in diesem Ausführungsbeispiel entsprechend dem ersten bezüglich der Figur 2 beschriebenen Verfahren.

In Schritt 304 wird ermittelt, ob der Zustandswert 201 einen Zustandsschwellwert 211 überschreitet. Wird der Zustandsschwellwert 211 vom Zustandswert 201 nicht überschritten, so springt das Verfahren zurück zum Schritt 302, in welchem erneut ein Signal eines Initialsensors erfasst wird und anschließend im Schritt 303 der Zustandswert 201 aktualisiert wird.

Wird der Zustandsschwellwert 211 jedoch vom Zustandswert 201 überschritten, wird diese Information an eine Crasherkennungsfunktion weitergegeben. Diese Crasherkennungsfunktion ist dazu ausgelegt, einen Crash zu erkennen. Hierfür wird wenigstens einen Signal eines Crashsensors eingelesen. In diesem Ausführungsbeispiel werden mehrere Beschleunigungssignale eingelesen. Aus diesen Beschleunigungssignalen wird mittels der Crasherkennungsfunktion ein Crashsignal ermittelt. Übersteigt dieses Crashsignal einen vordefinierten Crashschwellwert, wird von der Crasherkennungsfunktion ein Crash erkannt. Diese Information kann anschließend beispielsweise dafür verwendet werden, eine Personen-Schutzvorrichtung auszulösen. In diesem Ausführungsbeispiel wird ein Fahrerairbag ausgelöst, sobald das Crashsignal den Crashschwellwert überschreitet.

Wird nun in Schritt 304 festgestellt, dass der Zustandswert 201 einen Zustandsschwellwert 211 überschreitet, wird diese Information im Schritt 305 der Crasherkennungsfunktion weitergegeben.

Das Verfahren endet in Schritt 306.

In einer alternativen Ausführungsform des Verfahrens kann der Zustandswert 201 auch kontinuierlich an die Crasherkennungsfunktion übertragen werden. Wird ein vordefinierter Zustandsschwellwert 211 überschritten, kann diese Information von der Crasherkennungsfunktion beispielsweise dafür verwendet werden, eine Sensitivierung einer Crasherkennung zu verhindern. Dies kann beispielsweise dann sinnvoll sein, wenn die Crasherkennungsfunktion zusätzlich zu den Beschleunigungswerten Daten von Umfeldsensoren auswertet oder diese mit in die Crasherkennung einfließen. Es ist beispielsweise denkbar, dass eine Crasherkennungsfunktion sensitiviert wird, beispielsweise ein Crashschwellwert herabsetzt wird, wenn mittels der Signale von Umfeldsensoren festgestellt wird, dass ein Crash bevorsteht. Befindet sich ein Fahrzeug gleichzeitig auf einer Straße, welche in schlechtem Zustand ist und folglich die Crasherkennungsfunktion beeinflussen könnte, beispielsweise indem hohe Beschleunigungswerte gemessen werden, die auf schlechte Straßenbedingungen aber auf keinen Unfall zurückzuführen sind, kann eine derartige Sensitivierung der Crasherkennungsfunktion zu Fehlinterpretationen der Situation führen.

In einer alternativen Ausführungsform wird der Crasherkennungsfunktion nicht der Zustandswert 201 übermittelt, sondern eine Misusegröße 204, wie sie beispielsweise im oben vorgestellten Verfahren ermittelt wird.

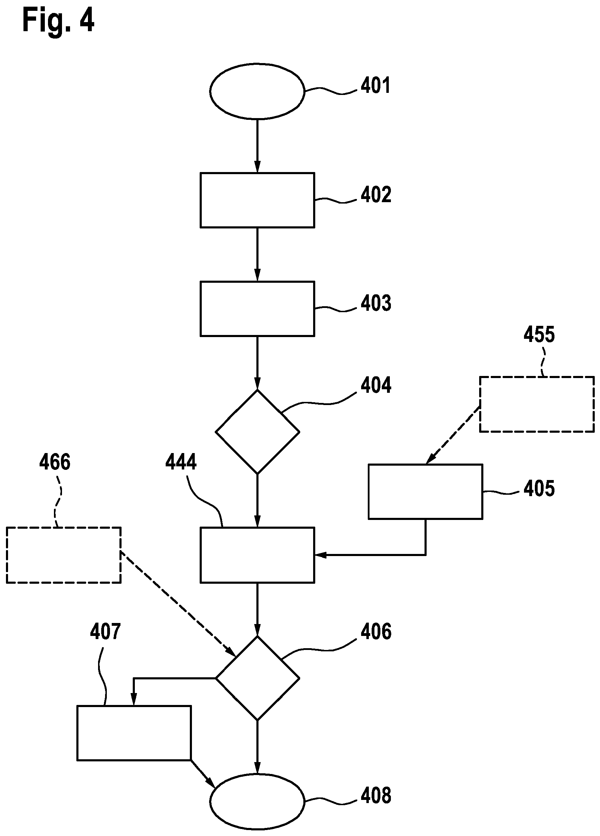

In Figur 4 wird ein weiteres Verfahren beschrieben, in welchem mehrere der oben beschriebenen Verfahren miteinander kombiniert werden. Das Verfahren startet in Schritt 401.

In Schritt 402 wird wenigstens ein Signal eines Inertialsensors erfasst. Dieses Signal wird in Schritt 403 ausgewertet und anhand des Signals ein Zustandswert 201 ermittelt. Dieser kann beispielsweise entsprechend des ersten zur Figur 2 beschriebenen Verfahrens ermittelt werden.

In Schritt 404 wird der Zustandswert 201 mit einem Zustandsschwellwert 211 verglichen und es wird eine Misusegröße 204 erzeugt. Diese wird der in Schritt 444 ausgeführten Funktion zur Ermittlung eines Crashschwellwerts zur Verfügung gestellt.

In Schritt 455 werden Signale von wenigstens einem Umfeldsensor erfasst, in diesem Ausführungsbeispiel einer Kamera. In Schritt 405 findet eine Auswertung dieser Signale statt. Hierbei werden Objekte in der Umgebung des Fahrzeugs erfasst und ermittelt, ob eine Kollision mit einem dieser Objekte bevorsteht. In diesem Ausführungsbeispiel wird eine Wahrscheinlichkeit für eine derartige Kollision der in Schritt 444 ausgeführten Funktion zur Ermittlung eines Crashschwellwerts zur Verfügung gestellt.

In Schritt 444 erfolgt die Ermittlung eines Crashschwellwerts. Dieser ist zunächst fest definiert, kann aber bei dem Erkennen einer bevorstehenden Kollision sensitiviert werden. Ob eine Kollision bevorsteht, wird anhand der in Schritt 405 ermittelten Wahrscheinlichkeit für eine Kollision festgestellt. Eine Sensitivierung entspricht in diesem Ausführungsbeispiel einer Verringerung des Crashschwellwerts, sodass schon bei einem niedrigeren Crashsignal von einem Crash ausgegangen wird.

Ob eine derartige Sensitivierung des Crashschwellwert tatsächlich durchgeführt wird, hängt in diesem Ausführungsbeispiel zusätzlich von der in Schritt 404 ermittelten Misusegröße 204 ab. Hat die Misusegröße 204 den Wert null, so kann eine Sensitivierung des Crashschwellwert basierend auf einer in Schritt 405 vorhergesagten Kollision erfolgen. Hat die Misusegröße 204 jedoch den Wert eins, so wird eine Sensitivierung des Crashschwellwert unterdrückt und es findet folglich kein herabsetzen des Crashschwellwerts statt.

In Schritt 406 erfolgt eine Crasherkennung, wobei mittels einer Crasherkennungsfunktion ermittelt wird, ob ein Crash vorliegt und folglich eine Person-Schutzvorrichtung ausgelöst werden sollte. Für diese Auswertung empfängt die Crasherkennungsfunktion Signale von Crashsensoren, in diesem Ausführungsbeispiel von mehreren Druck-und Beschleunigungssensoren, welche in Schritt 466 erfasst wurden. Zudem wird der Crasherkennungsfunktion der in Schritt 444 ermittelte Crashschwellwert übertragen.

In diesem Ausführungsbeispiel wird anhand der Crasherkennungsfunktion ein Crashsignal basierend auf den erfassten Signalen der Crashsensoren ermittelt. Übersteigt das ermittelte Crashsignal den in Schritt 444 ermittelten Crashschwellwert, erfolgt in Schritt 407 eine Auslösung einer Personen-Schutzvorrichtung. In diesem Ausführungsbeispiel können hierfür mehrere Gurtstraffer, Airbags und Schutzvorrichtungen für Fußgänger ausgelöst werden.

Wird der vordefinierte Crashschwellwert nicht überschritten, springt das Verfahren zu Schritt 408, in welchem es endet, und es wird keine Person-Schutzvorrichtung ausgelöst. Nach dem Durchlaufen des Verfahrens und dem Erreichen von Schritt 408 startet das Verfahren erneut in Schritt 401.

In einer alternativen Ausführungsform dieses Verfahrens kann in Schritt 444 bei der Ermittlung des Crashschwellwerts auch eine Erhöhung des Crashschwellwerts stattfinden. Ist die Misusegröße 204 gleich eins, kann davon ausgegangen werden, dass der Zustand der Straße einen Einfluss auf eine Crasherkennung hat. Um Fehlinterpretationen einer Crashsituation zu vermeiden, kann der Crashschwellwert in dieser Situation angehoben werden.

In einer alternativen Variante werden beide Informationen gemeinsam ausgewertet und gegeneinander abgewogen, sodass eine optimale Anpassung des Crashschwellwerts erfolgt.

In einer weiteren Ausführungsform des Verfahrens wird in Schritt 404 nicht die Misusegröße 204 bereitgestellt, sondern lediglich der Zustandswert 201 übertragen. In Schritt 404 kann folglich eine detailliertere Auswertung des aktuell vorliegenden Zustandswerts 201 erfolgen und gegebenenfalls eine empfindlichere Anpassung des Crashschwellwerts erfolgen.

In einem weiteren Ausführungsbeispiel weist ein Fahrzeug eine Crasherkennungsfunktion auf, welche auf einer Recheneinheit ausgeführt wird. Zudem weist das Fahrzeug Beschleunigungssensoren zur Ermittlung eines Unfalls und Umfeldsensoren, in Form einer Kamera, eines Lidars und eines Radars auf. Des Weiteren ist dem Fahrzeug eine Empfangseinrichtung verbaut, mittels welcher Zustände von unterschiedlichen Streckenabschnitten empfangen werden können.

Die Crasherkennungsfunktion wertet sowohl die Signale der Umfeldsensoren als auch der Crashsensoren aus. Wird mittels der Umfeldsensoren eine bevorstehende Kollision erkannt, wird die Crasherkennung sensitiviert, sodass basierend auf den Signalen der Crashsensoren eine frühzeitigere Auslösung von Rückhaltemitteln durchgeführt wird als dies bei gleichen Randbedingungen (identische auf das Fahrzeug wirkende Beschleunigungen) ohne eine Sensitivierung der Crasherkennung der Fall wäre.

Allerdings ist Crasherkennungsfunktion zudem in der Lage, eine Sensitivierung auf Basis der Auswertung der Umfeldsensorik zu unterdrücken. Diese Unterdrückung geschieht basierend auf dem Zustand der von dem Fahrzeug befahrenen Fläche. Da im Fahrzeug kein Verfahren integriert ist, welches den Zustand der gerade befahrenen Fläche bewerten kann, wird eine Information über den Zustand der befahrenen Fläche empfangen. Dies geschieht mittels der im Fahrzeug verbauten Empfangseinrichtung.

Der Straßenzustand wird hierbei auf einem externen Server gespeichert und von diesem an das Fahrzeug versendet und dort empfangen. Die auf dem Server abgelegten Informationen können beispielsweise gesammelte Informationen von mehreren Fahrzeugen sein, in denen Funktionen zur Ermittlung eines Zustands einer befahrenen Fläche ausgeführt werden und welche die ermittelten Zustände an diesen Server übertragen.

In einer alternativen Ausführungsform sind die Zustände unterschiedlicher Streckenabschnitte bereits im Fahrzeug hinterlegt, beispielsweise auf einer digitalen Karte. Diese Zustände können von der Crasherkennungsfunktion eingelesen und dazu verwendet werden, eine Sensitivierung einer Crasherkennung zu unterdrücken.

In einer alternativen Ausführungsform werden Signale über einen Straßenzustand von weiteren Fahrzeugen über eine Car-to-Car-Kommunikationsschnittstelle ausgesendet und von dem Fahrzeug empfangen.

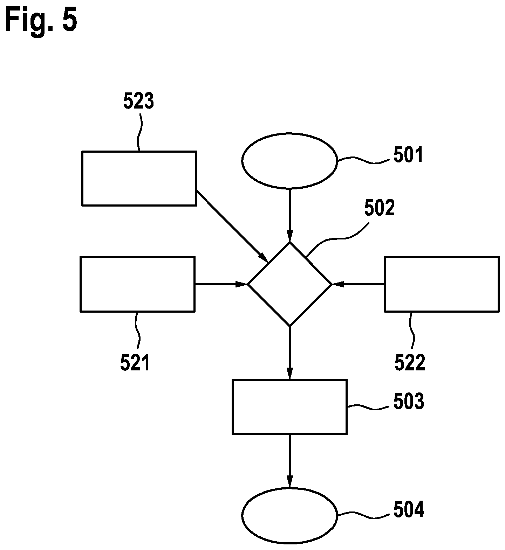

In Figur 5 ist das grundlegende Verfahren zur Ansteuerung einer Personen-Schutzvorrichtung für ein Fahrzeug dargestellt, welches in Schritt 501 startet.

In Schritt 502 wird mittels einer Crasherkennungsfunktion ermittelt, ob ein Crash vorliegt. Diese Ermittlung findet in Abhängigkeit wenigstens eines Signals eines Crashsensors 521 statt. Dieses Signal 521 wird in diesem Ausführungsbeispiel von einem Beschleunigungssensor erfasst.

Zudem findet die Ermittlung, ob ein Crash vorliegt, in Abhängigkeit von einem Signal einer Umfeldsensorik 522 statt. Dieses Signal 522 wird in diesem Ausführungsbeispiel mittels einer Kamera erfasst. Das mittels der Umfeldsensorik erfasste Signal dient hierbei dazu, die Crasherkennungsfunktion zu sensitivieren.

Des Weiteren findet die Ermittlung, ob ein Crash vorliegt, in Abhängigkeit von einem Zustand 523 einer von dem Fahrzeug befahrenen Fläche statt. Der Zustand der aktuell von dem Fahrzeug befahrenen Straße kann auf unterschiedliche Weisen ermittelt werden. Zum einen ist es möglich, dass der Zustand anhand von Beschleunigungssensoren im Fahrzeug, beispielsweise den vorhandenen Crashsensoren, ermittelt wird. Hierfür bietet sich beispielsweise das in Figur 2 dargestellte Verfahren an. In diesem Ausführungsbeispiel wird ein diesen Zustand 523 repräsentierendes Signal von einer Cloud empfangen, auf welcher aktuelle Daten über verschiedene Streckenabschnitte gespeichert sind.

Wird mittels der Crasherkennungsfunktion in Schritt 502 ermittelt, dass ein Crash vorliegt, wird in Schritt 503 eine Personen-Schutzvorrichtung ausgelöst. Welche Schutzvorrichtung ausgelöst wird, nach welcher Zeit und in welcher Stärke diese ausgelöst wird, hängt von dem Ergebnis der Berechnungen der Crasherkennungsfunktion ab. Die Crasherkennungsfunktion ist beispielsweise dazu in der Lage, unterschiedliche Crashschweren zu erkennen. Zudem kann erkannt werden, auf welcher Seite ein Crash stattfindet und ob es sich um eine Kollision mit einem Fahrzeug, einem Gegenstand, beispielsweise einem Baum, oder einem Menschen handelt. Das Verfahren endet in Schritt 504.

Wird mittels der Crasherkennungsfunktion in Schritt 502 ermittelt, dass kein Crash vorliegt, findet keine Auslösung einer Personen-Schutzvorrichtung statt. Wesentlich für diese Ermittlung und diese Erfindung ist die Einbeziehung des Zustands 523 der von dem Fahrzeug befahrenen Fläche.

## Patentansprüche

1. Verfahren zur Ansteuerung einer Personen-Schutzvorrichtung für ein Fahrzeug, insbesondere eines Airbags, wobei die Personen-Schutzvorrichtung angesteuert wird, wenn mittels einer Crasherkennungsfunktion in Abhängigkeit wenigstens eines Signals eines Crashsensors ein Crash ermittelt wird, wobei die Crasherkennungsfunktion in Abhängigkeit von einem Signal einer Umfeldsensorik sensitiviert wird wobei die Sensitivierung in Abhängigkeit von einem Zustand einer von dem Fahrzeug befahrenen Fläche erfolgt,
wobei
• zur Ermittlung des Zustands der von dem Fahrzeug befahrenen Fläche, ein diesen Zustand repräsentierender Zustandswerts (201) ermittelt wird, und
• der Zustandswert (201) in Abhängigkeit wenigstens eines von wenigstens einem Inertialsensor des Fahrzeugs erfassten ersten Signals (202)
• erhöht wird, wenn das erste Signal (202) einen Signalschwellwert (222) erreicht oder überschreitet und/oder
• verringert wird, wenn das erste Signal (202) den Signalschwellwert (222) unterschreitet, und
• keine Sensitivierung der Crasherkennungsfunktion erfolgt, wenn ein Zustand einer von dem Fahrzeug befahrenen Fläche, insbesondere einer Straße, als störend für die Crasherkennungsfunktion bewertet wird, wobei der Zustand dann als störend bewertet wird, wenn der Zustandswert (201) einen Zustandsschwellwert (211) überschreitet.

2. Verfahren zur Ansteuerung einer Personen-Schutzvorrichtung für ein Fahrzeug, insbesondere eines Airbags, wobei die Personen-Schutzvorrichtung angesteuert wird, wenn mittels einer Crasherkennungsfunktion in Abhängigkeit wenigstens eines Signals eines Crashsensors ein Crash ermittelt wird, wobei die Crasherkennungsfunktion in Abhängigkeit von einem Signal einer Umfeldsensorik sensitiviert wird wobei die Sensitivierung in Abhängigkeit von einem Zustand einer von dem Fahrzeug befahrenen Fläche erfolgt,
wobei
• zur Ermittlung des Zustands der von dem Fahrzeug befahrenen Fläche, ein diesen Zustand repräsentierender Zustandswerts (201) ermittelt wird, und
• der Zustandswert (201) in Abhängigkeit wenigstens eines von wenigstens einem Inertialsensor des Fahrzeugs erfassten ersten Signals (202)
• erhöht wird, wenn das erste Signal (202) einen Signalschwellwert (222) erreicht oder überschreitet und/oder
• verringert wird, wenn das erste Signal (202) den Signalschwellwert (222) unterschreitet, und
• der Crashschwellwert erhöht wird, wenn ein Zustand einer von dem Fahrzeug befahrenen Fläche, insbesondere einer Straße, als störend für die Crasherkennungsfunktion bewertet wird, wobei der Zustand dann als störend bewertet wird, wenn der Zustandswert (201) einen Zustandsschwellwert (211) überschreitet.

3. Verfahren nach Anspruch 1 oder 2, **dadurch gekennzeichnet, dass** beim Überschreiten des Zustandsschwellenwertes (211) eine Misusegröße (204) auf eins gesetzt wird, die (Seite 14, Zeilen 5 ff.) einen Straßenzustand anzeigt, der sich negativ auf die Crasherkennung auswirkt.

4. Verfahren nach Anspruch 3, **dadurch gekennzeichnet, dass** die Misusegröße (204) für einen vordefinierten Zeitraum auf eins gesetzt bleibt, selbst wenn der Zustandswert (201) den Zustandsschwellenwert (211) wieder unterschritten hat.

5. Verfahren nach einem der vorhergehenden Ansprüche, **dadurch gekennzeichnet, dass** ein Crash ermittelt wird, wenn ein - anhand von wenigstens einem von einem Crashsensor erfassten Signal - ermitteltes Crashsignal einen Crashschwellwert überschreitet.

6. Verfahren nach einem der vorhergehenden Ansprüche, **dadurch gekennzeichnet, dass** die Crasherkennungsfunktion sensitiviert wird, indem der Crashschwellwert angepasst wird, insbesondere herabgesetzt wird.

7. Verfahren nach einem der einem der vorhergehenden Ansprüche, **dadurch gekennzeichnet, dass** die Crasherkennung in Abhängigkeit wenigstens eines Umfeldsignals sensitiviert wird, wenn anhand des wenigstens einen Umfeldsignals eine bevorstehende Kollision erkannt wird.

8. Verfahren nach einem der vorhergehenden Ansprüche, **dadurch gekennzeichnet, dass** der Zustandswert (201) um einen vordefinierten Strafwert erhöht wird, wenn das erste Signal (202) einen Signalschwellwert (222) überschreitet.

9. Verfahren nach Anspruch 8, **dadurch gekennzeichnet, dass** eine Erhöhung des Strafwerts in Abhängigkeit einer ermittelten und/oder erfassten Amplitude des ersten Signals (202) erfolgt.

10. Verfahren nach einem der vorhergehenden Ansprüche, **dadurch gekennzeichnet, dass** der Zustandswert (201) kontinuierlich erhöht wird, solange das erste Signal (202) einen Signalschwellwert (222) überschreitet, wobei der Zustandswert (201) insbesondere linear erhöht wird.

11. Verfahren nach einem der vorhergehenden Ansprüche, **dadurch gekennzeichnet, dass** der Zustandswert (201) kontinuierlich verringert wird, solange das erste Signal (202) einen Signalschwellwert (222) unterschreitet, wobei der Zustandswert (201) insbesondere linear verringert wird.

12. Verfahren nach einem der vorhergehenden Ansprüche, **dadurch gekennzeichnet, dass** eine zeitliche Erhöhung des Zustandswerts (201) erfolgt, wobei eine Stärke der Erhöhung abhängig von einer ermittelten und/oder erfassten Amplitude des ersten Signals (202) ist.

13. Verfahren nach einem der vorhergehenden Ansprüche, **dadurch gekennzeichnet, dass** sich der Zustandswert (201) beim Überschreiten des erstens Signals (202) von dem Signalschwellwert (222) pro Zeitintervall stärker erhöht, als er sich in dem gleichen Zeitintervall beim Unterschreiten des ersten Signals (202) vom Signalschwellwert (222) verringert.

14. Verfahren nach Anspruch 13 **dadurch gekennzeichnet, dass** mehrere Zustandsschwellenwerte festgelegt werden, bei deren Unter- oder Überschreiten definierte Sensitivierungen durch eine gestufte Anpassung des Crashschwellenwerts erfolgt.

15. Recheneinheit zur Ansteuerung einer Personen-Schutzvorrichtung für ein Fahrzeug, insbesondere eines Airbags, die durch eine entsprechende integrierte Schaltung und/oder durch ein auf einem Speichermedium gespeichertes Computerprogramm dazu eingerichtet ist, ein Verfahren nach einem der Ansprüche 1 bis 14 durchzuführen.

## Claims

1. Method for actuating a personal protection device for a vehicle, in particular an airbag, the personal protection device being actuated if a crash is detected by means of a crash detection function on the basis of at least one signal from a crash sensor, the crash detection function being sensitized on the basis of a signal from an environment sensor system, the sensitization being effected on the basis of a condition of a surface used by the vehicle,
wherein
• the condition of the surface used by the vehicle is determined by determining a condition value (201) representing that condition, and
• the condition value (201), on the basis of at least one first signal (202) acquired by at least one inertial sensor of the vehicle
• is increased if the first signal (202) reaches or exceeds a signal threshold value (222) and/or
• is reduced if the first signal (202) falls below the signal threshold value (222), and
• the crash detection function is not sensitized if a condition of a surface used by the vehicle, in particular of a road, is assessed as disruptive to the crash detection function, the condition being assessed as disruptive if the condition value (201) exceeds a condition threshold value (211).

2. Method for actuating a personal protection device for a vehicle, in particular an airbag, the personal protection device being actuated if a crash is detected by means of a crash detection function on the basis of at least one signal from a crash sensor, the crash detection function being sensitized on the basis of a signal from an environment sensor system, the sensitization being effected on the basis of a condition of a surface used by the vehicle,
wherein
• the condition of the surface used by the vehicle is determined by determining a condition value (201) representing that condition, and
• the condition value (201), on the basis of at least one first signal (202) acquired by at least one inertial sensor of the vehicle
• is increased if the first signal (202) reaches or exceeds a signal threshold value (222) and/or
• is reduced if the first signal (202) falls below the signal threshold value (222), and
• the crash threshold value is increased if a condition of a surface used by the vehicle, in particular of a road, is assessed as disruptive to the crash detection function, the condition being assessed as disruptive if the condition value (201) exceeds a condition threshold value (211).

3. Method according to Claim 1 or 2, **characterized in that** when the condition threshold value (211) is exceeded, a misuse variable (204) that (page 14, lines 5 ff.) indicates a road condition that has an adverse effect on crash detection is set to one.

4. Method according to Claim 3, **characterized in that** the misuse variable (204) remains set to one for a predefined period of time, even if the condition value (201) has fallen below the condition threshold value (211) again.

5. Method according to one of the preceding claims, **characterized in that** a crash is detected if a crash signal that has been determined - on the basis of at least one signal acquired by a crash sensor - exceeds a crash threshold value.

6. Method according to one of the preceding claims, **characterized in that** the crash detection function is sensitized by adjusting, in particular lowering, the crash threshold value.

7. Method according to one of the preceding claims, **characterized in that** the crash detection is sensitized on the basis of at least one environment signal if an impending collision is detected on the basis of the at least one environment signal.

8. Method according to one of the preceding claims, **characterized in that** the condition value (201) is increased by a predefined penalty value if the first signal (202) exceeds a signal threshold value (222).

9. Method according to Claim 8, **characterized in that** the penalty value is increased on the basis of a determined and/or recorded amplitude of the first signal (202).

10. Method according to one of the preceding claims, **characterized in that** the condition value (201) is continuously increased while the first signal (202) exceeds a signal threshold value (222), the condition value (201) being increased in particular linearly.

11. Method according to one of the preceding claims, **characterized in that** the condition value (201) is continuously reduced while the first signal (202) falls below a signal threshold value (222), the condition value (201) being reduced in particular linearly.

12. Method according to one of the preceding claims, **characterized in that** the condition value (201) is increased over time, a sharpness of the increase being dependent on a determined and/or recorded amplitude of the first signal (202).

13. Method according to one of the preceding claims, **characterized in that** the condition value (201) increases more sharply per time interval when the first signal (202) exceeds the signal threshold value (222) than it decreases in the same time interval when the first signal (202) falls below the signal threshold value (222).

14. Method according to Claim 13, **characterized in that** multiple condition threshold values are defined that, when underrun or exceeded, result in defined sensitizations being effected by means of gradual adjustment of the crash threshold value.

15. Computing unit for actuating a personal protection device for a vehicle, in particular an airbag, which is configured by an applicable integrated circuit and/or by a computer program stored on a storage medium to carry out a method according to one of Claims 1 to 14.

## Revendications

1. Procédé de commande d'un dispositif de protection des personnes pour un véhicule, en particulier d'un airbag, le dispositif de protection des personnes étant commandé lorsqu'une collision est détectée au moyen d'une fonction de détection de collision en fonction d'au moins un signal d'un capteur de collision, la fonction de détection de collision étant sensibilisée en fonction d'un signal d'un système de capteurs d'environnement, la sensibilisation s'effectuant en fonction d'un état d'une surface parcourue par le véhicule, dans lequel
• pour déterminer l'état de la surface parcourue par le véhicule, une valeur d'état (201) représentant cet état est déterminée, et
• la valeur d'état (201) est, en fonction d'au moins un premier signal (202) détecté par au moins un capteur inertiel du véhicule,
• augmentée lorsque le premier signal (202) atteint ou dépasse une valeur seuil de signal (222) et/ou
• diminuée lorsque le premier signal (202) passe en dessous de la valeur seuil de signal (222), et
• aucune sensibilisation de la fonction de détection de collision n'a lieu lorsqu'un état d'une surface parcourue par le véhicule, en particulier d'une route, est évalué comme étant perturbateur pour la fonction de détection de collision, l'état étant alors évalué comme étant perturbateur lorsque la valeur d'état (201) dépasse une valeur seuil d'état (211).

2. Procédé de commande d'un dispositif de protection des personnes pour un véhicule, en particulier d'un airbag, le dispositif de protection des personnes étant commandé lorsqu'une collision est détectée au moyen d'une fonction de détection de collision en fonction d'au moins un signal d'un capteur de collision, la fonction de détection de collision étant sensibilisée en fonction d'un signal d'un système de capteurs d'environnement, la sensibilisation s'effectuant en fonction d'un état d'une surface parcourue par le véhicule, dans lequel
• pour déterminer l'état de la surface parcourue par le véhicule, une valeur d'état (201) représentant cet état est déterminée, et
• la valeur d'état (201) est, en fonction d'au moins un premier signal (202) détecté par au moins un capteur inertiel du véhicule,
• augmentée lorsque le premier signal (202) atteint ou dépasse une valeur seuil de signal (222) et/ou
• diminuée lorsque le premier signal (202) passe en dessous de la valeur seuil de signal (222), et
• la valeur seuil de collision est augmentée lorsqu'un état d'une surface parcourue par le véhicule, en particulier d'une route, est évalué comme étant perturbateur pour la fonction de détection de collision, l'état étant alors évalué comme étant perturbateur lorsque la valeur d'état (201) dépasse une valeur seuil d'état (211).

3. Procédé selon la revendication 1 ou la revendication 2, **caractérisé en ce que**, lorsque la valeur seuil d'état (211) est dépassée, une grandeur de mésusage (204) est réglée sur un, qui (page 14, lignes 5 et suivantes) indique un état de la route qui a un effet négatif sur la détection de collision.

4. Procédé selon la revendication 3, **caractérisé en ce que** la grandeur de mésusage (204) reste, pendant une durée prédéfinie, réglée sur un, même lorsque la valeur d'état (201) repasse en dessous de la valeur seuil d'état (211).

5. Procédé selon l'une des revendications précédentes, **caractérisé en ce qu'**une collision est détectée lorsqu'un signal de collision déterminé - sur la base d'au moins un signal détecté par un capteur de collision - dépasse une valeur seuil de collision.

6. Procédé selon l'une des revendications précédentes, **caractérisé en ce que** la fonction de détection de collision est sensibilisée en ajustant, en particulier en abaissant, la valeur seuil de collision.

7. Procédé selon l'une des revendications précédentes, **caractérisé en ce que** la détection de collision est sensibilisée en fonction d'au moins un signal d'environnement lorsqu'une collision imminente est détectée au moyen dudit au moins un signal d'environnement.

8. Procédé selon l'une des revendications précédentes, **caractérisé en ce que** la valeur d'état (201) est augmentée d'une valeur de pénalité prédéfinie lorsque le premier signal (202) dépasse une valeur seuil de signal (222).

9. Procédé selon la revendication 8, **caractérisé en ce qu'**une augmentation de la valeur de pénalité est effectuée en fonction d'une amplitude déterminée et/ou enregistrée du premier signal (202).

10. Procédé selon l'une des revendications précédentes, **caractérisé en ce que** la valeur d'état (201) est augmentée en continu tant que le premier signal (202) dépasse une valeur seuil de signal (222), la valeur d'état (201) étant en particulier augmentée de manière linéaire.

11. Procédé selon l'une des revendications précédentes, **caractérisé en ce que** la valeur d'état (201) est diminuée en continu tant que le premier signal (202) est inférieur à une valeur seuil de signal (222), la valeur d'état (201) étant en particulier diminuée de manière linéaire.

12. Procédé selon l'une des revendications précédentes, **caractérisé en ce qu'**une augmentation temporelle de la valeur d'état (201) a lieu, une intensité de l'augmentation dépendant d'une amplitude déterminée et/ou enregistrée du premier signal (202).

13. Procédé selon l'une des revendications précédentes, **caractérisé en ce que** la valeur d'état (201), lorsque le premier signal (202) excède la valeur seuil de signal (222) par intervalle de temps, augmente plus fortement qu'elle ne diminue dans le même intervalle de temps lors du passage du premier signal (202) en dessous de la valeur seuil de signal (222).

14. Procédé selon la revendication 13, **caractérisé en ce que** plusieurs valeurs de seuil d'état sont définies, en cas de dépassement vers le bas ou vers le haut desquelles des sensibilisations définies sont effectuées par un ajustement progressif de la valeur seuil de collision.

15. Unité de calcul pour la commande d'un dispositif de protection de personnes pour un véhicule, en particulier d'un airbag, qui est conçue, par un circuit intégré correspondant et/ou par un programme informatique enregistré sur un support de mémoire, pour mettre en œuvre un procédé selon l'une des revendications 1 à 14.
